# EUROPÄISCHE PATENTSCHRIFT

(11) **EP 3 723 196 B1**
(45) Veröffentlichungstag und Bekanntmachung des Hinweises auf die Patenterteilung: **12.07.2023**
(21) Anmeldenummer: 19169036.1
(22) Anmeldetag: 12.04.2019
(51) Int. Cl.: H01Q 1/32, H01Q 7/08, H01F 3/10, H01Q 1/40, H01F 3/14, H01F 27/02, H01F 27/26, H01F 41/00, H01F 17/04

(54) **ANTENNE**
ANTENNA
ANTENNE

(43) Veröffentlichungstag der Anmeldung: 14.10.2020
(73) Patentinhaber: Schaffner EMV AG, 4542 Luterbach (CH)
(72) Erfinder: Pasko, Szymon, 43-188 Orzesze (PL); Lebreton, Stéphane, 68790 Morschwiller-le-bas (FR); Musiqi, Shemsi, 4522 Rüttenen (CH); Dalessandro, Luca, 8005 Zürich (CH)
(74) Vertreter: P&TS SA (AG, Ltd.)

(56) Entgegenhaltungen:
- DE-A1-102005 057 556
- DE-A1-102016 010 493
- FR-A1- 2 920 916
- US-A1- 2018 122 551

## Beschreibung

### Technisches Gebiet

Die Erfindung bezieht sich auf eine Antenne, insbesondere auf eine Antenne für die Verwendung einem Fahrzeug ausgebildet für die Übertragung von Schlüsseldaten zum Öffnen und/oder Starten des Fahrzeugs.

### Stand der Technik

Antennen bestehen in der Regel aus einem ferromagnetischen Kern und einer Spule. Die Antennen werden in der Regel in einem Gehäuse vergossen. Je nach der Sendefrequenz und der Bandbreite muss der Kern und die Spule entsprechend ausgeführt werden. Die Bandbreiten von Antennen werden immer breiter, z.B. für UWB Antennen und die Reichweite der Antenne immer grösser, was zum Beispiel zur Folge hat, dass auch die Kerne immer länger werden. Lange Kerne sind aber auch bruchanfälliger als kürze Kerne und aufwendiger in der Herstellung.

Deshalb ist inzwischen bekannt, den Kern durch eine Mehrzahl von hintereinander angeordneten Unterkernen auszubilden, z.B. in US10056687, EP1397845, US2018/159224, DE102016010493. Dies hat den Vorteil, dass die Herstellung der einzelnen Unterkerne einfacher ist und die Bruchanfälligkeit der Unterkerne sinkt. Es hat sich aber gezeigt, dass die magnetischen Eigenschaften des aus mehreren Unterkernen gebildeten Kerns sehr anfällig gegen Stösse oder Temperaturschwankungen sind und diese Antennen oft Probleme mit der Stabilität der Antenneneigenschaften haben.

US2018/122551A1 offenbart eine Drossel, die mit einer Vergussmasse zwischen 20 und 90 Shore A in einem Gehäuse vergossen ist. Grundsätzlich wäre es möglich eine weichere Vergussmasse auch für Antennen zu verwenden, die Stöße besser dämpft und somit die Bruchanfälligkeit dämpft. Allerdings gibt es strenge Qualitätsvorgaben für die Positionierung der Antennenteile, die nur eine sehr kleine Toleranz für die Positionierung der Antennenteile erlaubt, damit eine Stabilität der elektrischen Eigenschaften der Antenne nicht beeinträchtigt wird. Deshalb wird die Vergussmasse nicht zu weich gewählt.

Ein alternativer Ansatz wird in US10062484 verfolgt. Hier werden magnetische Fäden in eine nicht magnetische weiche Masse eingelassen und somit flexible magnetische Kerne geschaffen. Diese flexiblen magnetischen Kerne haben aber schlechtere magnetische Eigenschaften, als klassische (harte) magnetische Kerne.

### Darstellung der Erfindung

Es ist ein Ziel der Erfindung, eine Antenne zu finden, die robust ist, einfach in der Herstellung ist und gute und stabile Antenneneigenschaften aufweist.

Erfindungsgemäss wird dieses Ziel bei einer Antenne und einem Herstellungsverfahren für eine solche nach den unabhängigen Ansprüchen erzielt.

Die Verwendung einer Vergussmasse weicher als 40 Shore A schafft aufgrund der sehr guten Dämpfung sehr robuste Antennen. Überaschenderweise sind aber auch die Antenneneigenschaften sehr stabil. Dies liegt vielleicht darin, dass bei härteren Vergussmassen, ein Stoss zu einer Beschädigung der Vergussmasse oder der Positioniermittel geführt hat und somit zu einer dauerhaften falschen Positionierung der Antenne bzw. von Antennenteilen. Durch die Verwendung von sehr weichen Vergussmassen, führt der Stoss nur zu einer sehr kurzen Verschiebung der Antennenteile in der Vergussmasse und danach werden die Antennenteile wieder an den gleichen ursprünglichen Ort zurückgeführt. Erfindungsgemäss wird eine kurzzeitige Überschreitung der vorgegebenen Toleranzen akzeptiert, um die Langzeitstabilität der Antenne zu verbessern. Somit wird durch die sehr weiche Vergussmasse eine sehr robuste Antenne mit sehr guten elektrischen Eigenschaften geschaffen.

Weitere vorteilhafte Ausführungsformen sind in den abhängigen Ansprüchen angegeben.

In einem Ausführungsbeispiel ist die Vergussmasse weicher als 35 Shore A, vorzugsweise weicher als 30 Shore A, vorzugsweise weicher als 27 Shore A, vorzugsweise weicher als 25 Shore A ist. Diese Härten der Vergussmasse ergaben noch bessere Werte für die Bruchstabilität und die Stabilität der elektrischen Werte. In einem Ausführungsbeispiel ist die Vergussmasse härter als 10 Shore A, vorzugsweise als 15 Shore A. In diesem Bereich oberhalb von 10 bzw. 15 Shore A wird ein Optimum zwischen Bruchstabilität und elektrischer Stabilität erreicht.

In einem Ausführungsbeispiel weist der Kern eine Mehrzahl von Unterkernen auf, wobei die Mehrzahl von Unterkernen einen ersten Unterkern und einen zweiten Unterkern aufweist. Mehrere Unterkerne vereinfachen die Produktion des Kerns und Verbessern dessen Bruchstabilität. Insbesondere für Ausführungsbeispiele mit Unterkernen ist die weiche Vergussmasse vorteilhaft. Es wurde herausgefunden, dass die weiche Vergussmasse dazu führt, dass die relative Position der zwei Unterkerne nach Stössen weniger beeinflusst wird und somit die elektrischen Parameter der Antenne weniger beeinflusst werden. In einem Ausführungsbeispiel ist der erste Unterkern mit einem Abstand vom zweiten Unterkern angeordnet. Dies hat sich insbesondere in Kombination mit der weichen Vergussmasse als besonders vorteilhaft erwiesen. Die weiche Vergussmasse erlaubt den Unterkernen eine bestimmte Bewegungsspielraum bei Empfangen eines Stosses. Wenn die Unterkerne nun sich berühren, so wird ein Stoss von dem ersten Unterkern auf den zweiten Unterkern übertragen und kann somit die Bruchwahrscheinlichkeit der Unterkerne trotz weicher Vergussmasse wieder erhöhen. Durch den Spalt zwischen den Unterkernen wird dies vermieden. Falls sich die Unterkerne berühren, hängen die magnetischen Eigenschaften des gesamten Kerns sehr stark von der Kraft ab, mit der die beiden Unterkerne aneinander gedrückt werden. Durch die weiche Vergussmasse könnte der Anpressdruck der beiden Unterkerne stark variieren und sogar zu einer Separation der Unterkerne führen. Diese Variation des Anpressdrucks könnte durch Vibrationen, Stösse oder auch eine Variation der Temperatur verursacht werden. Dies führt zu grossen elektrischen Instabilitäten der Antenne, die nicht gewünscht sind. Deshalb ist es bei der Verwendung der weichen Vergussmasse in Kombination mit einer Mehrzahl von Unterkernen besonders vorteilhaft, einen Spalt zwischen den Unterkernen zu verwenden. Dadurch wird die thermische und elektrische Stabilität der Antenne wesentlich verbessert. In einem Ausführungsbeispiel wird der durch den Abstand gebildete Spalt von der Vergussmasse gefüllt. Somit wirkt die Vergussmasse zwischen den Unterkernen ebenfalls als Dämpfer und leitet auch so gut die Wärme zwischen den Unterkernen ab in die restliche Vergussmasse.

In einem Ausführungsbeispiel weist der erste Unterkern eine erste Längsachse und der zweite Unterkern eine zweite Längsachse auf. In einem Ausführungsbeispiel sind der erste Unterkern und der zweite Unterkern so angeordnet, dass die zweite Längsachse sich in Verlängerung der ersten Längsachse erstreckt. In einem Ausführungsbeispiel weist der erste Unterkern rechtwinkelig zu der ersten Längsachse einen ersten Querschnitt auf und der zweite Unterkern rechtwinkelig zu der zweiten Längsachse einen zweiten Querschnitt auf. In einem Ausführungsbeispiel entspricht der zweite Querschnitt dem ersten Querschnitt. In einem Ausführungsbeispiel sind der erste Unterkern und der zweite Unterkern so angeordnet, dass der erste Querschnitt bündig zu dem zweiten Querschnitt angeordnet ist. In einem Ausführungsbeispiel weist der erste Unterkern entlang der gesamten ersten Längsachse den gleichen ersten Querschnitt auf. In einem Ausführungsbeispiel weist der zweite Unterkern entlang der gesamten zweiten Längsachse den gleichen zweiten Querschnitt auf.

In einem Ausführungsbeispiel weist der erste Unterkern ein erstes Ende und ein dem ersten Ende gegenüberliegendes zweite Ende auf. In einem Ausführungsbeispiel weist der zweite Unterkern ein erstes Ende und ein dem ersten Ende gegenüberliegendes zweite Ende auf. In einem Ausführungsbeispiel ist das erste Ende des ersten Unterkerns gegenüber dem ersten Ende des zweiten Unterkerns angeordnet.

In einem Ausführungsbeispiel weist die Antenne einen Kernträger auf. Der Kernträger erlaubt es bestimmte für die elektrische Stabilität gewünschte Bewegungen des Kerns zu unterbinden und andere für die elektrische Stabilität und die Bruchstabilität gewünschte Bewegungen zu erlauben. In einem Ausführungsbeispiel trägt der Kernträger den ersten und zweiten Unterkern. Insbesondere für Ausführungsbeispiele mit zwei Unterkernen, insbesondere mit solchen mit einem Spalt ist ein Kernträger sehr vorteilhaft, da er bei der ansonsten komplizierten Positionierung hilft.

In einem Ausführungsbeispiel erstreckt der Kernträger sich von dem zweiten Ende des ersten Unterkerns bis zu dem zweiten Ende des zweiten Unterkerns (abgesehen von einem evtl. herausstehenden Ende eines Unterkerns, z.B. bis zu 10%, vorzugsweise bis zu 5% der Länge des Kerns 1). Dies erlaubt eine stabile Halterung der Unterkerne über die Länge des Kerns 1.

In einem Ausführungsbeispiel wird die Spule auf den Kernträger gewickelt. Dies hat den Vorteil, dass die Unterkerne während dem Wickeln der Spule stabil gehalten werden. In einem Ausführungsbeispiel ist die Spule so gewickelt, dass die Spule sich über mehr als 80 % der Länge zwischen den zweiten Enden der Unterkerne erstreckt.

In einem Ausführungsbeispiel ist der Kernträger, bevor die Unterkerne, der Kernträger und die Spule in dem Gehäuse mit dem Vergussmasse vergossen werden, ausgebildet, den ersten Unterkern und/oder den zweiten Unterkern in Richtung der Längsachse des entsprechenden Unterkerns in den Kernträger zur Montage einzuschieben.

In einem Ausführungsbeispiel ist der Kernträger mit den montierten Unterkernen und der Spule, bevor die Unterkerne, der Kernträger und die Spule in dem Gehäuse mit dem Vergussmasse vergossen werden, ausgebildet, den ersten Unterkern und/oder den zweiten Unterkern in Richtung der Längsachse des entsprechenden Unterkerns zu verschieben.

In einem Ausführungsbeispiel ist der Kernträger mit den montierten Unterkernen und der Spule, bevor die Unterkerne, der Kernträger und die Spule in dem Gehäuse mit dem Vergussmasse vergossen werden, ausgebildet, den ersten Unterkern und/oder den zweiten Unterkern rechtwinkelig zu der Richtung der Längsachse des entsprechenden Unterkerns zu fixieren.

In einem Ausführungsbeispiel ist die Position des Kernträgers, der Spule, des ersten Unterkerns und/oder des zweiten Unterkerns in dem Gehäuse durch die Vergussmasse fixiert.

In einem Ausführungsbeispiel ist die Antenne für die Verwendung in einem Fahrzeug ausgebildet und/oder für die Übertragung von Schlüsseldaten zum Öffnen und/oder Starten des Fahrzeugs.

In einem Ausführungsbeispiel weist ein Fahrzeug eine zuvor beschriebene Antenne auf.

### Kurze Beschreibung der Figuren

Die Erfindung wird anhand der beigefügten Figuren näher erläutert, wobei zeigen
- **Fig. 1**: eine 3D Ansicht eines ersten Ausführungsbeispiels einer Antenne mit halb-aufgeschnittenen Gehäuse und Vergussmasse.
- **Fig. 2**: eine 3D Ansicht des ersten Ausführungsbeispiels der Antenne ohne Gehäuse und Vergussmasse.
- **Fig. 3**: eine 3D Ansicht des ersten Ausführungsbeispiels der Antenne ohne Kernträger, Gehäuse und Vergussmasse.

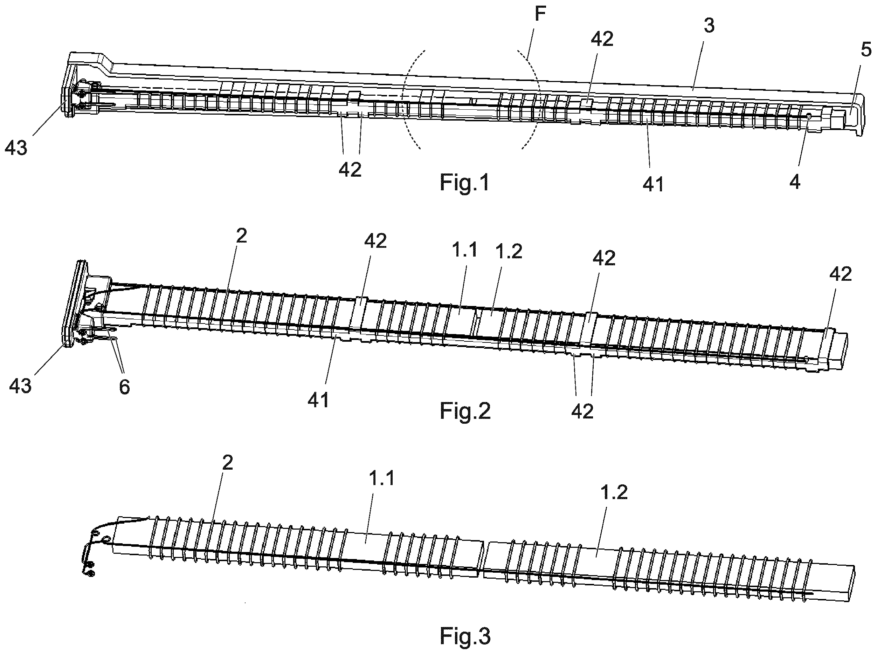

- **Fig. 3**: eine erste Schnittansicht durch die Antenne nach dem ersten Ausführungsbeispiel

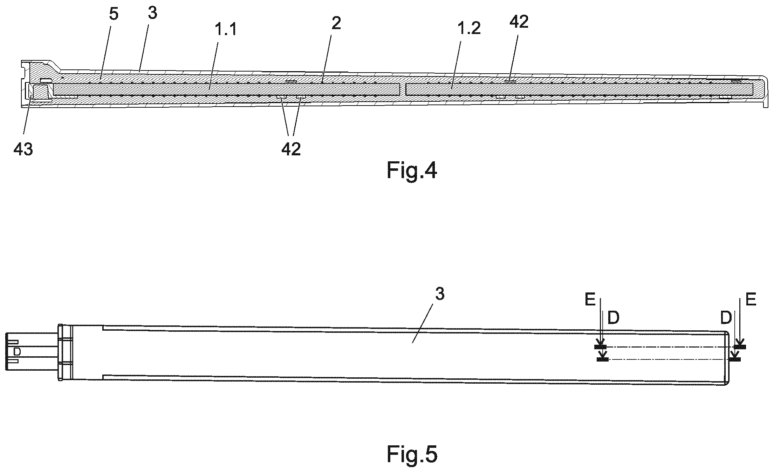

- **Fig. 4**: eine Draufsicht auf die Antenne nach dem ersten Ausführungsbeispiel.

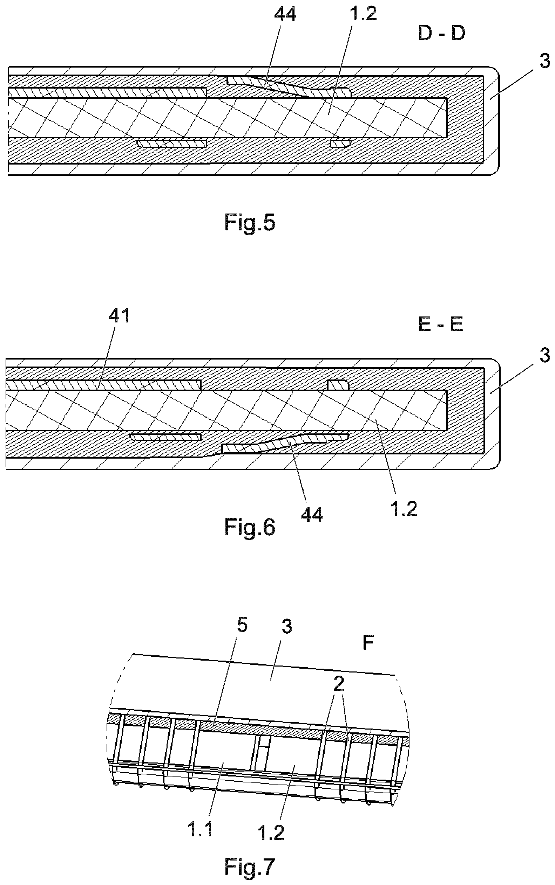

- **Fig. 5**: eine zweite Schnittansicht durch die Antenne nach dem ersten Ausführungsbeispiel entlang der Linie D-D.
- **Fig. 6**: eine dritte Schnittansicht durch die Antenne nach dem ersten Ausführungsbeispiel entlang der Linie E-E.
- **Fig. 7**: eine Vergrösserung des Ausschnitts F aus Fig. 1.

### Wege zur Ausführung der Erfindung

Fig. 1 bis 7 zeigen ein Ausführungsbeispiel der Erfindung.

Die Antenne weist einen Kern 1, eine Spule 2, ein Gehäuse, einen Kernträger 4 und eine Vergussmasse 5 auf.

Der Kern 1 ist ein magnetischer Kern. Der Kern 1 erstreckt sich vorzugsweise entlang einer Längsachse. Vorzugsweise ist der Kern 1 länger in Richtung der Längsachse als in die anderen (zu der Längsachse rechtwinkeligen) Richtungen/Achsen. Der Kern 1 ist aus einem magnetischen Material. Vorzugsweise ist der Kern aus einem Ferritmaterial (Ferritmaterial) oder einem Pulvermaterial (Pulverkern) zum Beispiel ein Ferritmaterial. Magnetisches Material bedeutet, dass das Material zumindest paramagnetisch ist, vorzugsweise ferromagnetisch ist. Der magnetisch Kern 1 ist aus einem harten Material, d.h. der magnetische Kern 1 ist nicht elastisch oder biegsam. Der magnetische Kern 1 hat vorzugsweise einen rechteckigen Querschnitt.

Vorzugsweise besteht der magnetische Kern aus einer Mehrzahl von Unterkernen 1.1 und 1.2. Die oben beschriebenen Materialeigenschaften des Kerns 1 gilt entsprechend für jeden Unterkern 1.1, 1.2. Vorzugsweise werden die gleichen magnetischen Materialen für verschiedene Unterkerne 1.1 und 1.2 verwendet. Die Mehrzahl von Unterkernen 1.1 und 1.2 weist zumindest zwei Unterkerne 1.1 und 1.2 mit einem ersten Unterkern 1.1 und einem zweiten Unterkern 1.2 auf. Der erste Unterkern weist eine erste Längsachse auf. Der zweite Unterkern weit eine zweite Längsachse auf. Der erste Unterkern 1.1 und der zweite Unterkern 1.2 sind vorzugsweise so angeordnet sind, dass die zweite Längsachse sich in Verlängerung der ersten Längsachse erstreckt (so dass die erste und die zweite Längsachse die Längsachse des Kerns 1 ausbilden). Das heisst, die erste und zweite Längsachse sind zueinander nicht geknickt, sind mit 0° bzw. 180° angeordnet und/oder sind parallel/koaxial/überlappend zueinander. Der erste Unterkern 1.1 weist ein erstes Ende und ein (in Richtung der ersten Längsachse) gegenüber dem ersten Ende liegendes zweites Ende auf. Der zweite Unterkern 1.2 weist ein erstes Ende und ein (in Richtung der zweiten Längsachse) gegenüber dem ersten Ende liegendes zweites Ende auf. Das erste Ende des ersten Unterkerns 1.1 ist vorzugsweise gegenüber dem ersten Ende des zweiten Unterkerns 1.2 angeordnet. Somit bildet das zweite Ende des ersten Unterkern 1.1 ein erstes Ende des Kerns 1 aus und, falls der Kern 1 aus den zwei Unterkernen 1.1, 1.2 besteht, bildet das zweite Ende des zweiten Unterkerns 1.2 ein zweites Ende des Kerns 1 aus. Der erste Unterkern 1.1 weist rechtwinkelig zu der ersten Längsachse einen ersten Querschnitt auf. Der zweite Unterkern 1.2 weist rechtwinkelig zu der zweiten Längsachse einen zweiten Querschnitt auf. Vorzugsweise entspricht der zweite Querschnitt dem ersten Querschnitt. Vorzugsweise sind der erste Unterkern 1.1 und der zweite Unterkern 1.2 so angeordnet, dass der erste Querschnitt des ersten Unterkerns 1.1 bündig zu dem zweiten Querschnitt des zweiten Unterkerns 1.2 angeordnet ist. Dies soll heissen, dass der zweite Unterkern 1.2 die Verlängerung des ersten Unterkerns 1.1 in der ersten bzw. zweiten Längsachse ausbildet, wobei beide Unterkerne 1.1 koaxial angeordnete Längsachsen und gleiche Querschnitte haben (, die bei nicht rotationssymmetrischen Querschnitten so angeordnet sind, dass die Querschnitte vollständig überlappen). Vorzugsweise weist der erste Unterkern 1.1 entlang der gesamten ersten Längsachse den gleichen ersten Querschnitt auf. Vorzugsweise weist der zweite Unterkern 1.2 entlang der gesamten zweiten Längsachse den gleichen zweiten Querschnitt auf. Vorzugsweise sind der erste Unterkern 1.1 und der zweite Unterkern 1.2 identisch, so dass die gleichen Teile für beide Unterkerne 1.1, 1.2 verwendet werden können. Vorzugsweise ist der erste Unterkern 1.1 mit einem Abstand vom zweiten Unterkern 1.2 angeordnet ist. Dadurch entsteht ein Spalt zwischen dem ersten Unterkern 1.1 und dem zweiten Unterkern 1.2. Der Abstand zwischen dem ersten Unterkern 1.1 und dem zweiten Unterkern 1.2 ist vorzugsweise grösser als 0,1 mm, vorzugsweise grösser als 0,3 mm, vorzugsweise grösser als 0,5 mm, vorzugsweise grösser als 1 mm. Vorzugsweise ist der Spalt kleiner als 10 mm, vorzugsweise kleiner als 7 mm, vorzugsweise als 5 mm, da ein zu grosser Spalt die Magnetfeldlinien zwischen den beiden Unterkernen 1.1, 1.2 negativ beeinflussen könnte.

Die Spule 2 ist um den Kern 1 gewickelt. Die Spule 2 weist vorzugsweise eine Mehrzahl von Windungen um den Kern 1 auf, vorzugsweise mit mehr als zwei, vorzugsweise mit mehr als fünf, vorzugsweise mit mehr als zehn, vorzugsweise mit mehr als fünfzehn, vorzugsweise mit mehr als zwanzig Windungen. Die Spule 2 erstreckt sich vorzugsweise von dem ersten Ende des Kerns 1 bzw. dem zweiten Ende des ersten Unterkerns 1.1 bis zu dem zweiten Ende des Kerns 1 bzw. dem zweiten Ende des zweiten Unterkerns 1.2, so dass der Bereich zwischen der letzten Windung der Spule 2 in Richtung des ersten Endes des Kerns 1 bzw. des zweiten Endes des ersten Unterkerns 1.1 und der letzten Windung der Spule 2 in Richtung zweiten Endes des Kerns 1 bzw. des zweiten Endes des zweiten Unterkerns 1.2 mindestens 70%, vorzugsweise mindestens 75%, vorzugsweise mindestens 80% der Längserstreckung des Kerns 1, bzw. der beiden Unterkerne 1.1, 1.2 zusammen ausmachen. Vorzugsweise erstreckt sich die Spule 2 über beide Unterkerne 1.1, 1.2. Die Spule 2 erstreckt sich vorzugsweise über beide Unterkerne 1.1, 1.2. Vorzugsweise ist die Spule 2 bzw. ein Spulendraht der Spule 2 auf den Kernträger 4 gewickelt. Allerdings ist es auch möglich, dass die Spule 2 bzw. der Spulendraht (ohne einen Kernträger 4) direkt auf den Kern 1 zu wickeln. Die Spule 2 weist vorzugsweise einen Spulendraht auf, der um den Kern 1, bzw. den Kernträger 4 gewickelt ist. Der Spulendraht ist vorzugsweise isoliert. Der Spulendraht kann aber auch nicht isoliert sein. Allerdings müsste dann bei der Wicklung aufgepasst werden, dass der Draht sich bei kreuzen nicht berührt und auch nicht den Kern 1 berührt. Vorzugsweise wird der Spulendraht so gewickelt, dass beide Enden des Spulendrahts an einem Ende des Kerns 1 mit Anschlüssen der Antenne verbunden sind. In dem gezeigten Ausführungsbeispiel ist die Spule 2 von dem ersten Ende des Kerns 1 zu dem zweiten Ende des Kerns 1 in eine Richtung gewickelt und der Spulendraht dann von dem zweiten Ende des Kerns 1 zu dem ersten Ende des Kerns 1 (ohne Windungen um den Kern 1) zurückgeführt. Es wäre aber auch möglich, den Spulendraht zuerst von dem ersten Ende des Kerns 1 zu dem zweiten Ende des Kerns 1 (ohne Windungen um den Kern 1) zu führen und dann von dem zweiten Ende des Kerns 1 zu dem ersten Ende des Kerns 1 in eine Richtung zu wickeln. Es ist auch möglich, den Spulendraht in beide Richtungen zu wickeln (Kreuzwicklung).

Der Kernträger 4 ist ausgebildet den Kern 1 zu tragen/halten. Dies ist vor allem für die Montage der Antenne vor dem Vergiessen wichtig, so dass alle Antennenteile in der richtigen Position gehalten werden, bevor die Antenne vergossen wird. Die nachfolgend beschriebenen Merkmale des Kernträgers 4 beziehen sich deshalb auf den Zustand vor dem Vergiessen der Antenne, falls dies nicht explizit anders beschrieben ist. Der Kernträger 4 ist vorzugsweise ausgebildet, die Spule 2 zu tragen. Vorzugsweise weist der Kernträger 4 eine Innenöffnung auf, in der der Kern 1 gehalten wird. Vorzugsweise weist der Kernträger 4 eine Aussenfläche auf, auf der die Spule 2 gewickelt wird. Der Kernträger 4 ist insbesondere für die Ausführungsbeispiele mit einer Mehrzahl an Unterkernen 1.1, 1.2 vorteilhaft. Der Kernträger 4 fixiert (zumindest in eine Richtung) vorzugsweise die Position der Unterkerne 1.1, 1.2 zueinander. Vorzugsweise fixiert der Kernträger 4 die Unterkerne 1.1, 1.2 so, dass diese rechtwinkelig zu der Längsachse des Kerns 1 bzw. der Unterkerne 1.1, 1.2 (zumindest in eine Richtung, vorzugsweise in alle Richtungen 330°, vorzugsweise 350° radial um die Längsachse, vorzugsweise in alle Richtungen radial um die Längsachse). Vorzugsweise kann zumindest einer der beiden Unterkerne 1.1, 1.2 (oder auch beide) in Richtung der Längsachse bewegt werden, wenn die beiden Unterkerne 1.1, 1.2 in dem Kernträger 4 montiert sind und die Spule 2 auf dem Kernträger 4 um den Kern 1 gewickelt ist. So kann die montierte Antenne vor dem Vergiessen noch feinjustiert werden, in dem der Abstand zwischen den beiden Unterkernen 1.1, 1.2 so eingestellt wird, dass die gewünschten Antenneneigenschaften erfüllt sind. Allerdings ist es auch möglich, dass die beiden Unterkerne 1.1, 1.2 in Ihrer Position komplett fixiert sind, so dass die Unterkerne 1.1, 1.2 Ihre Position (absolut und/oder relativ zueinander) nicht bewegen können. Vorzugsweise werden die Unterkerne 1.1, 1.2 zur Montage in Richtung der Längsachse des Kerns 1 bzw. der Unterkerne 1.1, 1.2 eingeführt. Dies erlaubt, dass die Unterkerne 1.1, 1.2 zueinander stabil positioniert werden können und trotzdem axial zueinander bewegt werden können. Allerdings ist es auch möglich, die Unterkerne 1.1, 1.2 anders in den Kernträger 4 einzuführen. Vorzugsweise erstreckt sich der Kernträger 4 von dem zweiten Ende des ersten Unterkerns bis zu dem zweiten Ende des zweiten Unterkerns. Dies erlaubt eine stabile Halterung der Unterkerne 1.1, 1.2. Dies ist für die Positionierung während der Herstellung vorteilhaft, und stabilisiert die vergossenen Unterkerne 1.1, 1.2 auch später in der Anwendung. In dem gezeigten Ausführungsbeispiel weist der Kernträger 4 mindestens einen, vorzugsweise zwei parallele Längsträger 41 (der/die sich in Richtung der Längsachse des Kerns 1 erstreckt/erstrecken) auf. Vorzugsweise weist der Kernträger 4 eine Mehrzahl von Querträgern 42, die die Bewegung der Unterkerne 1.1, 1.2 radial zu der Längsachse des Kerns 1 unterbinden/blockieren. In dem Bereich der Querträger 42 ist die Wicklung der Spule 2 vorzugsweise unterbrochen. Vorzugsweise verbinden die Querträger 42 jeweils die zwei Längsträger 41. Zur Beschreibung werden vier Seiten (rechtwinkelig zu der Längsachse des Kerns 1) des Kerns 1 als obere Seite (oder erste Seite), untere Seite (oder zweite Seite) und zwei laterale Seiten (dritte und vierte Seite) bezeichnet, ohne damit aber die Erfindung auf eine bestimmte Ausrichtung der Antenne zu beschränken. Vorzugsweise sind die obere und untere Seite gegenüberliegend und/oder sind die beiden seitlichen Seiten gegenüberliegend. Es gibt vorzugsweise obere Querträger 42, an denen die obere Seite des Kerns 1 anliegt. Es gibt vorzugsweise untere Querträger 42, an denen die untere Seite des Kerns 1 anliegt. Vorzugsweise sind die beiden Längsträger an den zwei seitlichen Seiten des Kerns 1 angeordnet, so dass die beiden seitlichen Seiten des Kerns 1 an den beiden Längsträgern anliegen. Der Kernträger 4 weist vorzugsweise an einem Ende einen Verschlussbereich 43, der ausgebildet ist, eine Öffnung des Gehäuses 3 zu verschliessen, wenn der Kernträger 4 (mit dem Kern 1 und der Spule 2) in das Gehäuse 3 montiert ist. Der Verschlussbereich 43 kann dabei integral mit dem restlichen Kernträger 4 aus einem Stück hergestellt sein. Es ist aber auch möglich, dass der Verschlussbereich 43 und der restliche Kernträger 4 aus separaten Teilen zusammengesetzt wird. Der Verschlussbereich 43 weist vorzugsweise einen Anschluss für die elektrische Verbindung der Antenne, insbesondere der Spule 2 auf. Vorzugsweise weist der Anschluss zwei elektrisch leitende Stäbchen auf, die sich durch den Verschlussbereich 43 erstrecken. Eine Seite jedes leitenden Stäbchens steht dabei aus dem Verschlussbereich 43 auf der äusseren Seite heraus, so dass die fertige Antenne elektrisch verbunden werden kann. Die gegenüberliegende Seite jedes leitenden Stäbchens steht auf der inneren Seite des Verschlussbereichs 43 heraus, wobei die Enden der Spule 2 bzw. des Spulendrahts jeweils mit einem dieser leitenden Stäbchen (auf der Innenseite) verbunden werden. Der Kernträger 4 ist vorzugsweise so ausgebildet, dass der Kernträger 4 nach der Montage in dem Gehäuse 3 eine vordefinierte Position aufweist. Auf der einen Seite der Antenne ist dies zum Beispiel durch die Positionierung des Verschlussbereichs 43 in der Öffnung des Gehäuses 3 gelöst. Vorzugsweise weist der Kernträger 4 weiter Positionierungsmittel 44 auf, die den Kernträger 4 in der vordefinierten Position halten, wenn der Kernträger 4 in dem Gehäuse 3 montiert ist. Die Positionierungsmittel 44 sind vorzugsweise auf der zu dem Verschlussbereich 43 entgegengesetzten Bereich des Kernträgers 4 angeordnet. Vorzugsweise sind die Positionierungsmittel 44 federnd so dass die Positionierungsmittel 44 die vordefinierte Position definieren, aber bei Vibrationen oder Stössen, Abweichungen von der vordefinierten Position erlauben. Vorzugsweise weisen die Positionierungsmittel 44 biegsame/federnde Arme 44, die gegen die Innenwand des Gehäuses 3 drücken und so den Kernträger 4 in dem Gehäuse 3 in die vordefinierte Position bringen. Dies ist in den Schnitten D-D und E-E in den Fig. 5 und 6 gezeigt. Der Kernträger 4 ist vorzugsweise aus einem Kunststoff hergestellt.

Das Gehäuse 3 ist ausgebildet, den Kern 1 mit der Spule 2 zu umschliessen. Vorzugsweise ist das Gehäuse 3 ausgebildet, den Kernträger 4 mit dem Kern 1 und der Spule 2 zu umschliessen. Das Gehäuse 3 weist vorzugsweise eine Öffnung auf, die ausgebildet ist, den Kern 1 mit der Spule 2 bzw. den Kernträger 4 mit Kern 1 und Spule 2 in das Gehäuse 3 einzuführen. Vorzugsweise wird die Öffnung von dem Kernträger 4 in dem eingeführten Zustand verschlossen. Allerdings ist es auch möglich, dass die Öffnung von einem separaten Deckel geschlossen wird.

Zwischen dem Gehäuse 3 und dem Kern 1 mit der Spule 2 bzw. dem Kernträger 4 mit dem Kern 1 und der Spule 2 ist eine Vergussmasse 5 angeordnet. Der Kern 1 mit der Spule 2 bzw. der Kernträger 4 mit dem Kern 1 und der Spule 2 wird in das Gehäuse 3 eingeführt und darin mit der Vergussmasse 5 vergossen. Die Vergussmasse 5 wird oft auch als Potting bezeichnet. Die Vergussmasse 5 füllt vorzugsweise die, vorzugsweise alle Hohlräume in dem Gehäuse 3 aus, so dass die Wärme von dem Kern 1 und der Spule 2 effektiv abgeleitet werden und der Kern 1 mit der Spule 2 bzw. der Kernträger 4 mit dem Kern 1 und der Spule 2 stabil gelagert wird. Erfindungsgemäss wird eine Vergussmasse 5 verwendet, die (im ausgehärteten Zustand) weicher ist als 40 Shore A, vorzugsweise als 35 Shore A, vorzugsweise als 30 Shore A, vorzugsweise als 27 Shore A, vorzugsweise als 25 Shore A. Es wurde herausgefunden, dass die Vergussmasse 5 weicher als 40 Shore A oder als die genannten bevorzugten Werte, nicht nur die Bruchstabilität verbessert, sondern überaschenderweise auch die Stabilität der elektrischen Werte der Antenne verbessert. Vorzugsweise ist die Vergussmasse 5 (im ausgehärteten Zustand) aber härter als 10 Shore A, vorzugsweise als 15 Shore A. Die Vergussmasse 5 mit einer Verformung zwischen 10 und 40 Shore A wurde als besonders vorteilhaft gefunden.

Zur Herstellung der Antenne wird zuerst der Kern 1 evtl. mit den Unterkernen 1.1, 1.2 in den Kernträger 4 montiert. Die Spule 2 wird auf den Kernträger 4 oder den Kern 1 gewickelt. Der Spulendraht wird mit dem Anschluss der Antenne verbunden. Der Kern 1 mit der Spule 2 bzw. der Kernträger 4 mit dem Kern 1 und der Spule 2 wird in das Gehäuse 3 eingeführt. Der Kern 1 mit der Spule 2 bzw. der Kernträger 4 mit dem Kern 1 und der Spule 2 wird in dem Gehäuse 3 mit der Vergussmasse 5 vergossen. Danach härtet die Vergussmasse 5 aus und die Antenne ist fertig.

## Patentansprüche

1. Antenne aufweisend ein Gehäuse (3), einen Kern (1) und eine Spule (2), die um den Kern (1) gewickelt ist, wobei der Kern (1) mit der Spule (2) in einer Vergussmasse (5) in dem Gehäuse (3) gelagert ist;
**dadurch gekennzeichnet**,
die Vergussmasse (5) weicher als 40 Shore A ist.

2. Antenne nach dem vorigen Anspruch, wobei die Vergussmasse (5) weicher als 30 Shore A ist.

3. Antenne nach Anspruch 1 oder 2, wobei der Kern (1) eine Mehrzahl von Unterkernen (1.1, 1.2) aufweist, wobei die Mehrzahl von Unterkernen (1.1, 1.2) einen ersten Unterkern (1.1) und einen zweiten Unterkern (1.2) aufweist.

4. Antenne nach Anspruch 3, wobei der erste Unterkern (1.1) eine erste Längsachse und der zweite Unterkern (1.2) eine zweite Längsachse aufweist, wobei der erste Unterkern (1.1) und der zweite Unterkern (1.2) so angeordnet sind, dass die zweite Längsachse sich in Verlängerung der ersten Längsachse erstreckt.

5. Antenne nach Anspruch 4, wobei der erste Unterkern (1.1) rechtwinkelig zu der ersten Längsachse einen ersten Querschnitt aufweist, wobei der zweite Unterkern (1.2) rechtwinkelig zu der zweiten Längsachse einen zweiten Querschnitt, der dem ersten Querschnitt entspricht, aufweist, wobei
der erste Unterkern (1.1) und der zweite Unterkern (1.2) so angeordnet sind, dass der erste Querschnitt bündig zu dem zweiten Querschnitt angeordnet ist, und/oder
der erste Unterkern (1.1) entlang der gesamten ersten Längsachse den gleichen ersten Querschnitt aufweist, und/oder der zweite Unterkern (1.2) entlang der gesamten zweiten Längsachse den gleichen zweiten Querschnitt aufweist.

6. Antenne nach Anspruch 4 oder 5, wobei der erste Unterkern (1.1) mit einem Abstand vom zweiten Unterkern (1.2) angeordnet ist, und ein durch den Abstand gebildeter Spalt von der Vergussmasse (5) gefüllt ist.

7. Antenne nach einem Ansprüche 3 bis 6 aufweisend einen Kernträger (4), wobei der erste Unterkern (1.1) und der zweite Unterkern (1.2) in dem Kernträger (4) gehalten sind.

8. Antenne nach Anspruch 7, wobei der erste Unterkern (1.1) ein erstes Ende und ein dem ersten Ende gegenüberliegendes zweite Ende aufweist, wobei der zweite Unterkern (1.2) ein erstes Ende und ein dem ersten Ende gegenüberliegendes zweite Ende aufweist, wobei das erste Ende des ersten Unterkerns (1.1) gegenüber dem ersten Ende des zweiten Unterkerns (1.2) angeordnet ist, wobei der Kernträger (4) sich von dem zweiten Ende des ersten Unterkerns (1.1) bis zu dem zweiten Ende des zweiten Unterkerns (1.2) erstreckt.

9. Antenne nach Anspruch 7 oder 8, wobei die Spule auf den Kernträger gewickelt wird, vorzugsweise so gewickelt, dass die Spule sich über mehr als 80 % der Länge zwischen den zweiten Enden der Unterkerne erstreckt.

10. Antenne nach einem der Ansprüche 7 bis 9, wobei die Position des Kernträgers (4), der Spule (2), des ersten Unterkerns (1.1) und/oder des zweiten Unterkerns (1.2) in dem Gehäuse (3) durch die Vergussmasse (5) fixiert ist.

11. Antenne nach einem der vorigen Ansprüche für die Verwendung in einem Fahrzeug ausgebildet für die Übertragung von Schlüsseldaten zum Öffnen und/oder Starten des Fahrzeugs.

12. Fahrzeug aufweisend eine Antenne nach Anspruch 11.

13. Herstellungsverfahren für eine Antenne aufweisend die Schritte:
Vergiessen eines mit einer Spule (2) umwickelten Kerns (1) mit einer Vergussmasse (5) in einem Gehäuse (3);
Aushärten lassen der Vergussmasse (5);
**dadurch gekennzeichnet, dass**
die ausgehärtete Vergussmasse (5) weicher als 40 Shore A ist.

14. Herstellungsverfahren nach Anspruch 13, wobei der Kern (1) eine Mehrzahl von Unterkernen (1.1, 1.2) aufweist, wobei die Mehrzahl von Unterkernen (1.1, 1.2) einen ersten Unterkern (1.1) und einen zweiten Unterkern (1.2) aufweist, wobei der erste Unterkern (1.1) und der zweite Unterkern (1.2) in dem Kernträger (4) gehalten werden, wobei bevor die Unterkerne (1.1, 1.2), der Kernträger (4) und die Spule (2) in dem Gehäuse (3) mit der Vergussmasse (5) vergossen werden, der erste Unterkern (1.1) und/oder der zweite Unterkern (1.2) in Richtung der Längsachse des entsprechenden Unterkerns (1.1, 1.2) zum Feinjustieren verschoben wird, in dem der Abstand zwischen den beiden Unterkernen (1.1,1.2) so eingestellt wird, dass die gewünschten Antenneneigenschaften erfüllt sind.

15. Herstellungsverfahren nach Anspruch 14, wobei der Kernträger mit den montierten Unterkernen und der Spule, bevor die Unterkerne, der Kernträger und die Spule in dem Gehäuse mit der Vergussmasse (5) vergossen werden, ausgebildet ist, den ersten Unterkern (1.1) und/oder den zweiten Unterkern (1.2) rechtwinkelig zu der Richtung der Längsachse des entsprechenden Unterkerns zu fixieren.

## Claims

1. Antenna comprising a housing (3), a core (1) and a coil (2) wound around the core (1), the core (1) with the coil (2) in a potting compound (5) being mounted in the housing (3);
**characterised in that**
the potting compound (5) is softer than 40 Shore A.

2. Antenna according to the previous claim, wherein the potting compound (5) is softer than 30 Shore A.

3. Antenna according to claim 1 or 2, wherein said core (1) comprises a plurality of partial cores (1.1, 1.2), said plurality of partial cores (1.1, 1.2) comprising a first partial core (1.1) and a second partial core (1.2).

4. Antenna according to claim 3, wherein the first partial core (1.1) has a first longitudinal axis and the second partial core (1.2) has a second longitudinal axis, wherein the first partial core (1.1) and the second partial core (1.2) are arranged such that the second longitudinal axis extends in extension of the first longitudinal axis.

5. Antenna according to claim 4, wherein said first partial core (1.1) has a first cross-section perpendicular to said first longitudinal axis, said second partial core (1.2) has a second cross-section perpendicular to said second longitudinal axis corresponding to said first cross-section, wherein said first partial core (1.1) and said second partial core (1.2) are arranged such that the first cross-section is flush with the second cross-section, and/or
the first partial core (1.1) has the same first cross-section along the entire first longitudinal axis, and/or the second partial core (1.2) has the same second cross-section along the entire second longitudinal axis.

6. Antenna according to claim 4 or 5, wherein the first partial core (1.1) is arranged at a distance from the second partial core (1.2), and a gap formed by the distance is filled by the potting compound (5).

7. Antenna according to any one of claims 3 to 6, comprising a core support (4), wherein the first partial core (1.1) and the second partial core (1.2) are retained in the core support (4).

8. Antenna according to claim 7, wherein said first partial core (1.1) has a first end and a second end opposite said first end, said second partial core (1.2) has a first end and a second end opposite said first end, said first end of said first partial core (1.1) being located opposite said first end of said second partial core (1.2), wherein said core support (4) extends from said second end of said first partial core (1.1) to said second end of said second partial core (1.2).

9. Antenna according to claim 7 or 8, wherein the coil is wound on the core support, preferably wound such that the coil extends for more than 80% of the length between the second ends of the partial cores.

10. Antenna according to any one of claims 7 to 9, wherein the position of the core support (4), the coil (2), the first partial core (1.1) and/or the second partial core (1.2) in the housing (3) is secured by the potting compound (5).

11. Antenna according to any of the preceding claims for use in a vehicle configured for the transmission of key-data for opening and/or starting the vehicle.

12. Vehicle comprising an antenna according to claim 11.

13. Manufacturing method for an antenna comprising the steps of:
Potting a core (1) wound with a coil (2) with a potting compound (5) in a housing (3);
allowing the potting compound (5) to cure;
**characterised in that**
the cured potting compound (5) is
softer than 40 Shore A.

14. Manufacturing method according to claim 13, wherein the core (1) comprises a plurality of partial cores (1.1, 1.2), wherein the plurality of partial cores (1.1, 1.2) comprises a first partial core (1.1) and a second partial core (1.2), wherein the first partial core (1.1) and the second partial core (1.2) are held in the core support (4), wherein before the partial cores (1.1, 1.2), the core support (4) and the coil (2) in the housing (3) are cast with the potting compound (5), the first partial core (1.1) and/or the second partial core (1.2) is displaced in the direction of the longitudinal axis of the corresponding partial core (1.1, 1.2) for fine adjustment, in which the distance between the two partial cores (1.1, 1.2) is set so that the desired antenna characteristics are fulfilled.

15. Manufacturing method according to claim 14, wherein the core support with the assembled partial cores and the coil, before the partial cores, the core support and the coil are cast in the housing with the potting compound (5), is designed to secure the first partial core (1.1) and/or the second partial core (1.2) perpendicularly to the direction of the longitudinal axis of the corresponding partial core.

## Revendications

1. Antenne, comportant un corps (3), un noyau (1) et une bobine (2), qui est enroulée autour du noyau (1), le noyau (1) étant logé avec la bobine (2) dans une masse de scellement (5) dans le corps (3) ;
**caractérisée**
**en ce que** la masse de scellement (5) est plus souple que 40 shore A.

2. Antenne selon la revendication précédente, la masse de scellement (5) étant plus souple que 30 shore A.

3. Antenne selon la revendication 1 ou 2, le noyau (1) comportant une pluralité de sous-noyaux (1.1, 1.2), la pluralité de sous-noyaux (1.1, 1.2) comportant un premier sous-noyau (1.1) et un deuxième sous-noyau (1.2).

4. Antenne selon la revendication 3, le premier sous-noyau (1.1) comportant un premier axe longitudinal et le deuxième sous-noyau (1.2) comportant un deuxième axe longitudinal, le premier sous-noyau (1.1) et le deuxième sous-noyau (1.2) étant placés de telle sorte, que le deuxième axe longitudinal s'étende dans le prolongement du premier axe longitudinal.

5. Antenne selon la revendication 4, le premier sous-noyau (1.1) comportant à angle droit par rapport au premier axe longitudinal une première section transversale, le deuxième sous-noyau (1.2) comportant à angle droit par rapport au deuxième axe longitudinal une deuxième section transversale, qui correspond à la première section transversale,
le premier sous-noyau (1.1) et le deuxième sous-noyau (1.2) étant placés de telle sorte que la première section transversale soit placée à fleur de la deuxième section transversale, et / ou
le premier sous-noyau (1.1) comportant le long de l'ensemble du premier axe longitudinal la même première section transversale, et / ou le deuxième sous-noyau (1.2) comportant le long de l'ensemble du deuxième axe longitudinal la même deuxième section transversale.

6. Antenne selon la revendication 4 ou 5, le premier sous-noyau (1.1) étant placé avec un écart par rapport au deuxième sous-noyau (1.2), et une fente créée par l'écart étant remplie par la masse de scellement (5).

7. Antenne selon l'une quelconque des revendications 3 à 6, comportant un support de noyau (4), le premier sous-noyau (1.1) et le deuxième sous-noyau (1.2) étant maintenus dans le support de noyau (4).

8. Antenne selon la revendication 7, le premier sous-noyau (1.1) comportant une première extrémité et une deuxième extrémité opposée à la première extrémité, le deuxième sous-noyau (1.2) comportant une première extrémité et une deuxième extrémité opposée à la première extrémité, la première extrémité du premier sous-noyau (1.1) étant placée au vis-à-vis de la première extrémité du deuxième sous-noyau (1.2), le support de noyau (4) s'étendant à partir de la deuxième extrémité du premier sous-noyau (1.1) jusqu'à la deuxième extrémité du deuxième sous-noyau (1.2).

9. Antenne selon la revendication 7 ou 8, la bobine étant enroulée sur le support de noyau, de préférence enroulée de telle sorte, que la bobine s'étende sur plus de 80 % de la longueur entre les deuxièmes extrémités des sous-noyaux.

10. Antenne selon l'une quelconque des revendications 7 à 9, la position du support de noyau (4), de la bobine (2), du premier sous-noyau (1.1) et / ou du deuxième sous-noyau (1.2) dans le corps (3) étant fixée par la masse de scellement (5).

11. Antenne selon l'une quelconque des revendications précédentes, destinée à l'utilisation dans un véhicule, conçue pour la transmission de données-clés pour ouvrir et / ou pour faire démarrer le véhicule.

12. Véhicule comportant une antenne selon la revendication 11.

13. Procédé de fabrication d'une antenne, comportant les étapes consistant à :
mouler un noyau (1) enroulé d'une bobine (2) avec une masse de scellement (5) dans un corps (3) ;
faire solidifier la masse de scellement (5) ;
**caractérisé en ce que**
la masse de scellement (5) solidifiée est plus souple que 40 shore A.

14. Procédé de fabrication selon la revendication 13, le noyau (1) comportant une pluralité de sous-noyaux (1.1, 1.2), la pluralité de sous-noyaux (1.1, 1.2) comportant un premier sous-noyau (1.1) et un deuxième sous-noyau (1.2), le premier sous-noyau (1.1) et le deuxième sous-noyau (1.2) étant maintenus dans le support de noyau (4), avant que les sous-noyaux (1.1, 1.2), le support de noyau (4) et la bobine (2) soient coulés dans le corps (3) avec la masse de scellement (5), le premier sous-noyau (1.1) et / ou le deuxième sous-noyau (1.2) étant déplacés en direction de l'axe longitudinal du sous-noyau (1.1, 1.2) correspondant, pour l'ajustage fin, en ce que l'écart entre les deux sous-noyaux (1.1, 1.2) est réglé de telle sorte, que les propriétés souhaitées pour l'antenne soient satisfaites.

15. Procédé de fabrication selon la revendication 14, avant que les sous-noyaux, le support de noyau et la bobine soient coulés dans le corps avec la masse de scellement (5), le support de noyau avec les sous-noyaux montés et la bobine étant conçu pour fixer le premier sous-noyau (1.1) et / ou le deuxième sous-noyau (1.2) à angle droit par rapport à la direction de l'axe longitudinal du sous-noyau correspondant.
